# EUROPEAN PATENT APPLICATION

(11) **EP 4 832 194 A2**
(43) Date of publication of application: **28.10.2026**
(21) Application number: 26173586.4
(22) Date of filing: 21.04.2026
(51) Int. Cl.: H01M 50/213, H01M 10/42, H01M 50/242, H01M 50/247, H01M 50/262, H01M 50/284, H01M 50/296, H01M 50/503, H01M 50/519

(54) **BATTERY PACK**

(30) Priority: 21.04.2025 US 202563792093 P
(71) Applicant: Milwaukee Electric Tool Corporation, Brookfield, WI 53005-2550 (US)
(72) Inventor: Golba, Thomas B., Brookfield, WI, 53005 (US); Schmeling, Thomas A., Brookfield, WI, 53005 (US); Keaton, Stephen A., Brookfield, WI, 53005 (US)
(74) Representative: Grünecker Patent- und Rechtsanwälte PartG mbB

(57) **Abstract**

A battery pack may include a casing configured to couple to a power tool. A battery pack may include a cell frame supported within the casing, the cell frame including a plurality of receptacles to secure a plurality of interconnected battery cells. A battery pack may include an outer housing at least partially surrounding the casing and the cell frame, the outer housing including protrusions extending through the casing and contacting the cell frame, the protrusions defining multiple points of contact between the casing and the outer housing, wherein the protrusions are positioned and configured to integrate the casing and the outer housing together to form a unitary structure.

## Description

### CROSS-REFERENCE AND FIELD TO RELATED APPLICATION

This application claims priority to U.S. Provisional Application No. 63/792,093, filed April 21, 2025, the entire contents of which are incorporated by reference herein.
The present invention relates to a battery pack, and particularly a battery pack for power tools.

### SUMMARY

In some aspects, the techniques described herein relate to a battery pack including a casing configured to couple to a power tool; a cell frame supported within the casing, the cell frame including a plurality of receptacles to secure a plurality of interconnected battery cells; and an outer housing at least partially surrounding the casing and the cell frame, the outer housing including protrusions extending through the casing and contacting the cell frame, the protrusions defining multiple points of contact between the casing and the outer housing, wherein the protrusions are positioned and configured to integrate the casing and the outer housing together to form a unitary structure.

In some aspects, the techniques described herein relate to a battery pack including a casing configured to couple to a power tool; and a cell frame supported within the casing, the cell frame including a plurality of receptacles to support interconnected battery cells, and a PCB electrically connected to the battery cells, and a terminal configured to engage a corresponding power tool terminal of the power tool, the terminal having a first end and a second end formed as a curved terminal contact, the terminal secured to the PCB at the first end and engaged with casing at the curved terminal contact, the curved terminal contact deformable during engagement with the corresponding power tool terminal to maintain electrical contact between the battery pack and the power tool.

In some aspects, the techniques described herein relate to a battery pack including a casing configured to couple to a power tool; a cell frame supported within the casing, the cell frame receiving a plurality of battery cells; a PCB supported by the cell frame; a weld strap supported by the cell frame and electrically connected to the plurality of battery cells; and a voltage tap supported by the cell frame and electrically connected between the PCB and the weld strap, the voltage tap defined by a deformable body that provides an elastic interaction with the PCB and the weld strap.

Other aspects of the invention will become apparent by consideration of the detailed description and accompanying drawings.

### BRIEF DESCRIPTION OF THE DRAWINGS

FIG. 1 is a perspective view of a battery pack according to some embodiments.
FIG. 2 is an exploded view of the battery pack according to FIG. 1.
FIG. 3 is a perspective view of the casing of the battery pack according to FIG. 1.
FIGS. 4A and 4B illustrate an upper portion of the outer housing of the battery pack according to FIG. 1.
FIG. 5 is a perspective view of the cell frame of the battery pack according to FIG. 1.
FIG. 6 is a cross-sectional view of the portion 6-6 of the battery pack according to FIG. 1.
FIG. 7A is a perspective view of the casing and the outer housing of the battery pack according to FIG. 1.
FIG. 7B is a bottom view of the casing and outer housing of the battery pack according to FIG. 1.
FIG. 8A is a side view of a voltage tap of the battery pack according to FIG. 1.
FIG. 8B is a detail view of the voltage tap of the battery pack according to FIG. 1, with the weld strap disposed on the cell frame.
FIG. 9 is a cross-sectional view of the portion 9-9 of the battery pack according to FIG. 1.
FIGS. 10A and 10B illustrates a terminal according to a battery pack in the prior art in some embodiments.
FIGS. 11A-C illustrate the stress and strain induced on a terminal according to the battery pack of FIG. 10A.
FIGS. 12A-12C illustrate embodiments of a terminal of the battery pack according to FIG. 1.
FIGS. 13A and 13B illustrates the stress and strain induced on the terminal according to the battery pack of FIG. 1.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

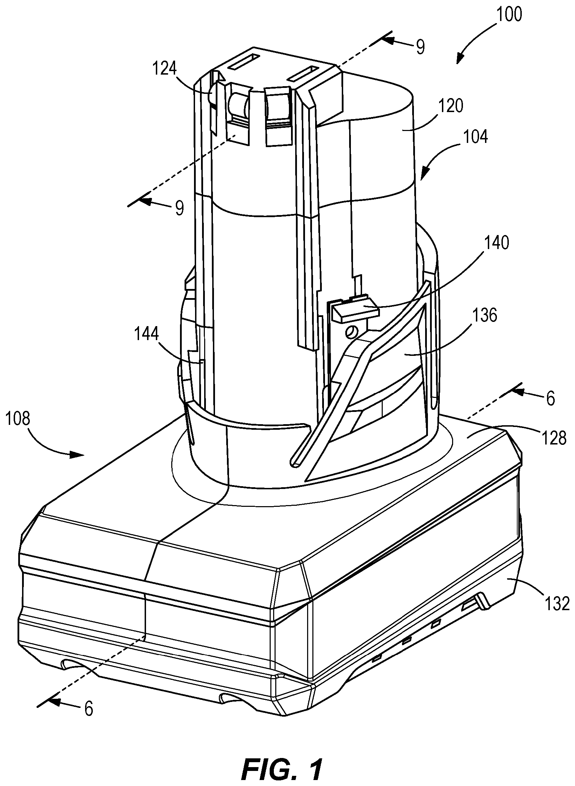

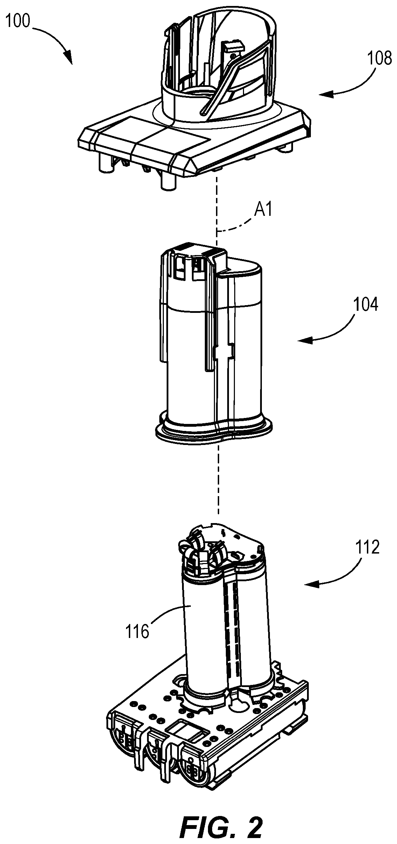

FIGS. 1-2 illustrate a battery pack 100 that is configured to be used with hand-held power tools. The battery pack 100 is removably and interchangeably connected to a hand-held power tool to provide operational power to the hand-held power tool. The battery pack 100 includes a casing 104, an outer housing 108 coupled to the casing 104, a cell frame 112 disposed within the casing 104 and the outer housing 108, and a plurality of battery cells 116 (see FIG. 2) positioned within the cell frame 112. The casing 104 is shaped and sized to fit within an opening and cavity in a hand-held power tool. The outer housing 108 surrounds and supports the casing 104 and the cell frame 112 and prevents liquid ingress from contacting the battery cells 116. The cell frame 112 secures and connects the plurality of battery cells 116.

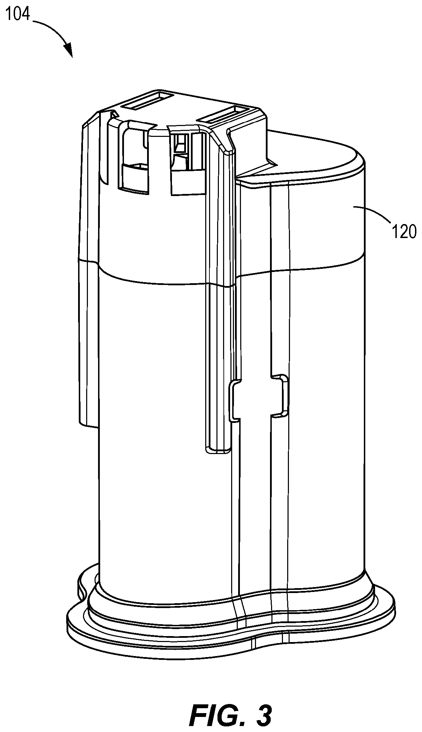

As shown in FIGS. 1-3, the casing 104 includes an end cap 120 to substantially enclose the battery cells 116 within the casing 104. Terminals 124 are exposed through the end cap 120. The terminals 124 are shaped and positioned to mate with corresponding power terminals on a hand-held power tool to provide power to the power tool. The end cap 120 may include terminals that extend from the battery pack 100 that are received in receptacles supported by a hand-held power tool. The terminals 124 may include at least two power terminals and at least one communication terminal shaped to mate with corresponding terminals from the hand-held power tool. Accordingly, when the battery pack 100 is coupled to a power tool, the casing 104 and the corresponding receptacles substantially enclose and cover the terminals on the tool and the battery pack 100. After the battery pack 100 is disconnected from the hand-held power tool and the casing 104 is removed from the opening, the battery terminals 124 on the battery pack 100 are generally exposed to the surrounding environment.

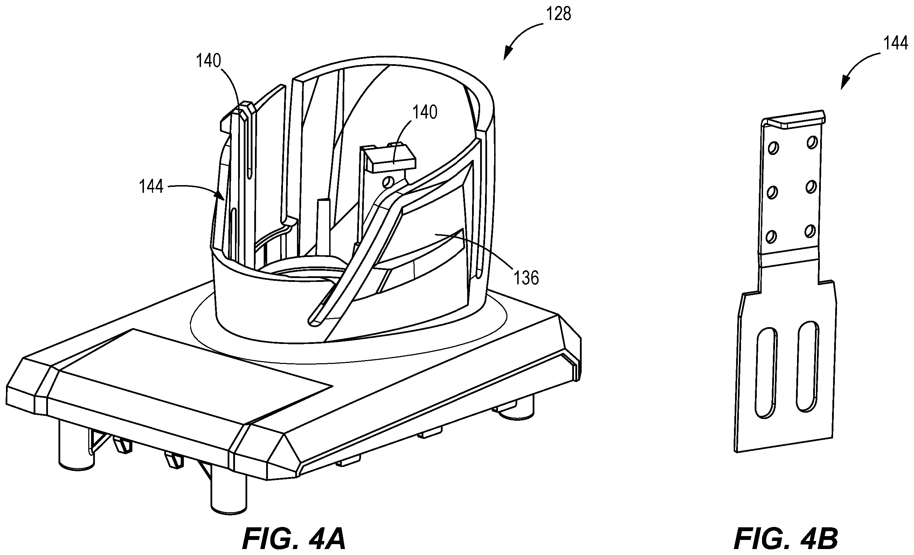

With reference to FIGS. 1 and 4A, the outer housing 108 has an upper portion 128 and a lower portion 132. In some embodiments, the upper portion 128 and the lower portion 132 may removably couple to one another using a snap fit or fastener. The outer housing 108 is coupled to an end of the casing 104 substantially opposite the end cap 120 and surrounds a portion of the casing 104. When the casing 104 is inserted into or positioned at least partially within the corresponding opening in the hand-held power tool, the outer housing 108 generally aligns with an outer surface of the hand-held power tool. As shown, two actuators 136 (only one of which is shown) and two tabs 140 are formed in the upper portion 128 of the outer housing 108. The actuators 136 and the tabs 140 define a coupling mechanism to releasably secure the battery pack 100 to hand-held power tool. Each tab 140 engages a corresponding recess formed in a hand-held power tool to secure the battery pack 100 in place. The tabs 140 are normally biased away from the casing 104 (i.e. away from each other) due to the resiliency of the material forming the outer housing 108. In some embodiments, the outer housing 108 is formed using a plastic. Engaging (e.g., depressing) the actuators 136 moves the tabs 140 toward the casing 105 (i.e. toward each other) and out of engagement with the recesses such that the battery pack 100 may be pulled out of the opening and away from the hand-held power tool. In some embodiments, a single tab and actuator are included in the battery pack 100. In the illustrated embodiment best shown in FIG. 4B, the tabs 140 are reinforced using a leaf spring 144. In other embodiments, other metallic or substantially elastic materials may be incorporated into at least a portion of the outer housing 108. In some embodiments, the casing 104 and the upper portion 128 of the outer housing 108 may be integrally formed as a single piece. In some embodiments, the casing 104 and/or the outer housing 108 may be made of a plastic such as Vicnyl R4345NH, Lonoy FR652, PA66-R55G25 H1A2BK-G0031, and PA66-RG001 NC103.

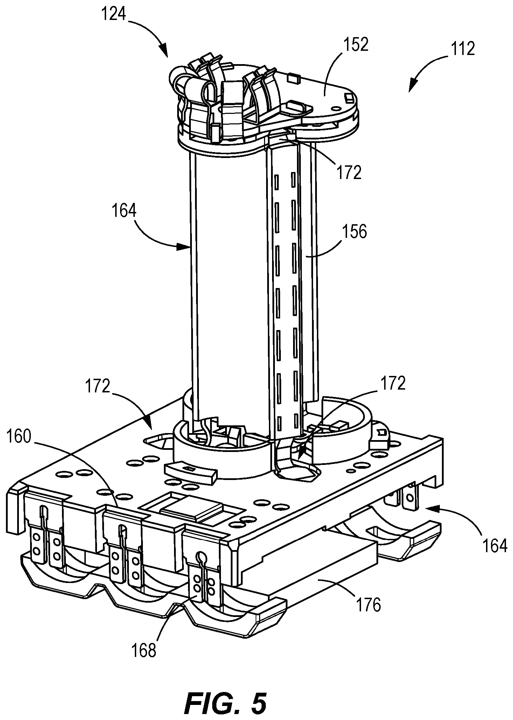

FIG. 5 illustrates the cell frame 112 without battery cells 116. The cell frame 112 includes a printed circuit board ("PCB") 152 for regulating the power output of the battery pack 100, an upper frame 156 disposed adjacent to the PCB 152, and a lower frame 160 coupled to the upper frame 156. Together, the PCB 152, the upper frame 156, and the lower frame 160 define a plurality of receptacles 164 for receiving the battery cells 116. The receptacles 164 include weld straps 168 that are coupled (e.g., welded, soldered, etc.) to the battery cells 116 to interconnect the plurality of battery cells 116. The weld straps 168 are electrically and communicatively connected to the PCB 152 such that the battery cells 116 may provide power to the terminals 124. The receptacles 164 may include voltage taps 172 for communicating a voltage or current of the battery cell disposed within the corresponding receptacle to the PCB 152. The voltage taps 172 may extend from the PCB 152, through the upper frame 156, and into the lower frame 160. As shown, the upper frame 156 and the lower frame 160 each define three receptacles 164. The lower frame 160 is electrically connected to the PCB 152 through the upper frame 156. In some embodiments, the battery cells 116 received within the receptacles 164 of the lower frame 160 may be electrically connected to the battery cells 116 received within the receptacles 164 of the upper frame 156. For example, each of weld straps 168 of the lower frame 160 may be coupled in series with the weld straps 168 of the upper frame 156 such that groups of two battery cells 116 are connected in series.

The lower frame 160 further includes a thermal gap pad 176 for supporting a portion of the battery cells 116 within a respective receptacle 164. It will be appreciated that the thermal gap pad 176 may regulate heat transferred between the battery cells 116 and the surrounding outer housing 108. The thermal gap pad 176 may prevent or substantially reduce the heat transferred between the battery cells 116 and the outer housing 108. A thermal gap pad 176 may additionally or alternatively be included in the upper frame 156, the PCB 152, or the casing 104.

The battery cells 116 provide operational power (e.g., DC power) to a hand-held power tool through the terminals 124.The battery cells 116 can be arranged in series, parallel, or a series-parallel combination. As shown, the battery pack 100 includes six battery cells configured such that groups of three cells are arranged in series and coupled to the other group of three cells in parallel. It will be appreciated that the battery pack 100 may include three battery cells 116 configured in a series arrangement or other combinations of the battery cells 116. For example, the battery pack 100 may include a different quantity of battery cells 116, which may be connected in series, parallel, or a series-parallel combination to produce a battery pack that has a desired combination of nominal battery pack voltage and battery capacity. The illustrated battery cells 116 are cylindrical battery cells. The battery cells 116 may have different sizes or shapes according to their power capacities. For example, the battery cells may be 14500 battery cells (14 mm diameter and 50 mm length), 17500 battery cells (17 mm diameter and 50 mm length), 18500 battery cells (18 mm diameter and 50 mm length), 26700 battery cells (26 mm diameter and 70 mm length), or other battery cells. The battery cells 116 are lithium-based battery cells having a chemistry of, for example, lithium-cobalt ("Li-Co"), lithium-manganese ("Li-Mn"), or Li-Mn spinel. The battery cells 116 have other suitable lithium or lithium-based chemistries, such as a lithium-based chemistry that includes manganese.

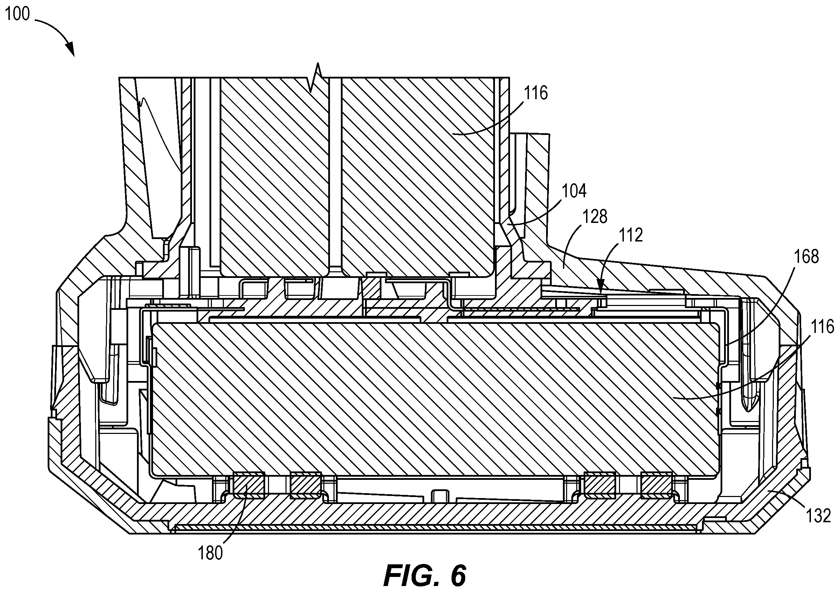

As shown in FIG. 6, the battery pack 100 includes a compression element 180 to prevent relative movement between components of the battery pack 100. More specifically, the compression element 180 is disposed between the battery cells 116 in the cell frame 112 and the lower portion 132 of the outer housing 108. The compression element 180 presses the cell frame 112 within the outer housing 108 to prevent additional shifting or movement that may result in the disconnection of an electrical connection (e.g., between the weld straps 168 and the battery cells 116). The compression element 180 may be a spring or other compressible material (e.g., EPDM). Over the lifetime of the battery pack 100, normal wear and vibrational forces over time may reduce the effectiveness of the force exerted by the compression element 180. Accordingly, over time, the cell frame 112 may shift relative to the casing 104 and outer housing 108, causing misalignment between the weld straps 168 and voltage taps 172. Wear may result in a portion of the battery cells 116 disconnecting from the terminals 124 through a disconnection in one of the weld straps 168, voltage taps 172, or another electrical connection. Movement of the cell frame 112 may also result in movement of the terminals 124 relative to the casing 104, resulting in partial or incomplete connections between the battery pack 100 and hand-held power tool.

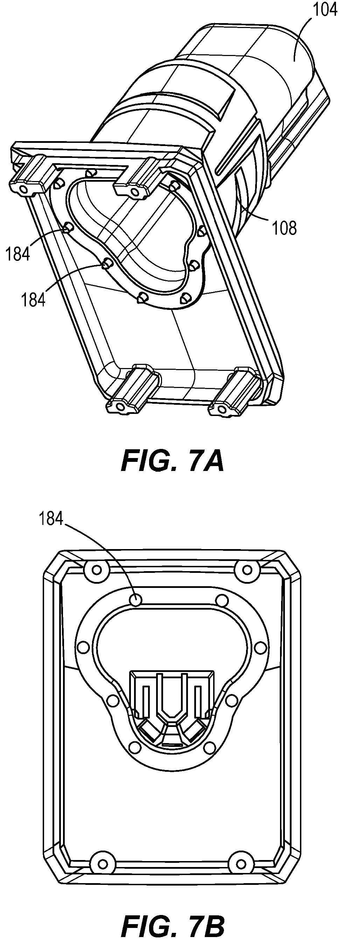

With reference to FIGS. 2, 7A, and 7B, the outer housing 108 may include protrusions 184 extending through the casing 104 (e.g., a flange of the casing 104). In the illustrated embodiment, the protrusions 184 extend from the outer housing 108 in a direction parallel to an axis of assembly A1 of the casing 104, the outer housing 108, and the cell frame 112 (e.g., parallel or along the insertion direction of the battery pack 100 into the power tool. The protrusions 184 are spaced about an inner periphery of the outer housing 108 and define a plurality of connection points between the casing 104 and the outer housing 108. In some embodiments, the protrusions 184 are uniformly spaced about the inner periphery of the outer housing 108. In other embodiments, the protrusions 184 may be spaced at irregular intervals. The protrusions 184 may additionally contact or be received by the cell frame 112. For example, the protrusions 184 may be formed by ultrasonic welding or heat staking to integrate or secure the outer housing 108 and casing 104 together such that the outer housing 108 and the casing 104 form a unitary structure (e.g., a monolithic structure) after the forming process. The protrusions 184 dampen and redistribute vibration throughout the battery pack 100 such that vibrational forces experienced by the casing 104 and outer housing 108 are reduced when transferred to the cell frame 112. It will be appreciated that the protrusions 184 provide multiple points of contact between the casing 104, outer housing 108, and the cell frame 112, which may reduce the relative movement between each individual component. Securing the casing 104 and outer housing 108 together using heat or ultrasonic staking assists with preventing relative movement between the casing 104 and outer housing 108, which minimizes vibration caused during operation. It will be appreciated that the reduction of vibrational forces and the reduction of relative movement between each of the casing 104, the outer housing 108, and the cell frame 112 provides protection against vibrational wear and reduces misalignment of the weld straps 168 and voltage taps 172. It should be appreciated that other components of the battery pack 100 may be heat-staked together to secure the respective components and, in at least some instances, minimize vibration.

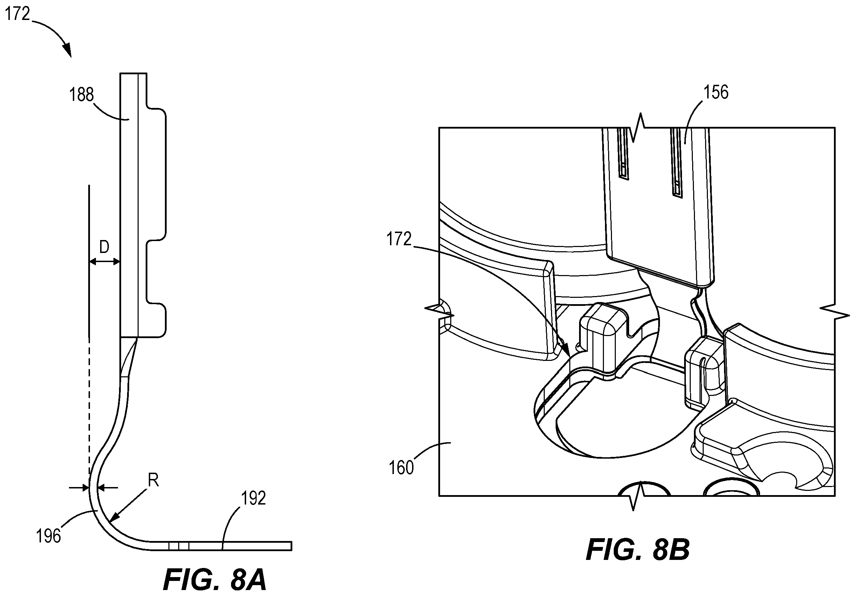

As described above, the voltage taps 172 communicate a voltage or current to the PCB 152 and accordingly may extend from the PCB 152 through the upper frame 156 of the cell frame 112, and contact the weld straps 168 supported in the lower frame 160. Accordingly, the voltage taps 172 may be electrically disconnected due to relative movement between portions of the cell frame 112. For example, FIGS. 8A and 8B illustrate a voltage tap 172 that extends from the PCB 152 and contacts the lower frame 160 of the cell frame 112. The voltage tap 172 includes a vertical portion 188, a horizontal portion 192, and a transitional portion 196. The vertical portion 188 may extend through the upper frame 156 of the cell frame and connect to the PCB 152. The horizontal portion 192 may be coupled to one of the plurality of weld straps 168 disposed in the lower frame 160 of the cell frame 112. The transitional portion 196 is defined by a curve with a radius R, and the transitional portion 196 is deformable under stress to provide strain relief without causing movement (e.g., translation) of either the vertical portion 188 or the horizontal portion 192 relative to the upper frame 156 or the lower frame 160, respectively. It will be appreciated that the transitional portion 196 may have a curvature that does not have a single radius R. As shown in FIG. 8A, the voltage taps 172 are defined by an accordion-style body that provides for a spring-like interaction with other components of the battery pack to minimize strain. The voltage tap 172 is defined by a deformable body that provides an elastic interaction with the PCB 152 and the weld strap 168. In some embodiments, only the transition portion 196 is deformable while the remainder of the voltage tap 172 is rigid such that the transition portion 196 provides an elastic interaction with the PCB 152. The curvature of the transitional portion 196 extends away from the horizontal portion 192 and the vertical portion 188 such that an outermost edge of the transitional portion 196 is disposed at a distance D away from the vertical portion 188. The distance D is greater than the thickness of the voltage tap 172. It will be appreciated that an increased radius R corresponds with a larger distance D.

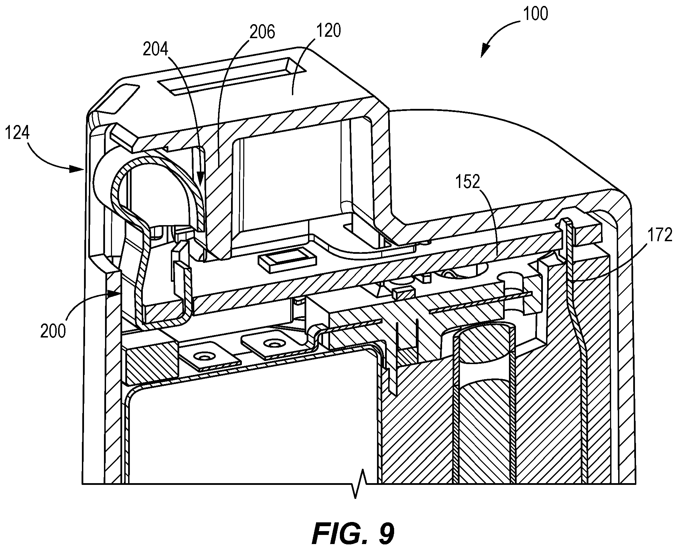

As illustrated in FIG. 9, the terminals 124 are secured to the PCB 152 at a first end 200 and contact the end cap 120 at a second end 204. The end cap 120 may include a first rib 206 for supporting and securing the terminals 124. During operation, the terminals 124 may act as spring members that are deformed by the corresponding terminals of a hand-held power tool, thereby ensuring prolonged contact without the use of a separate bias element or spring component.

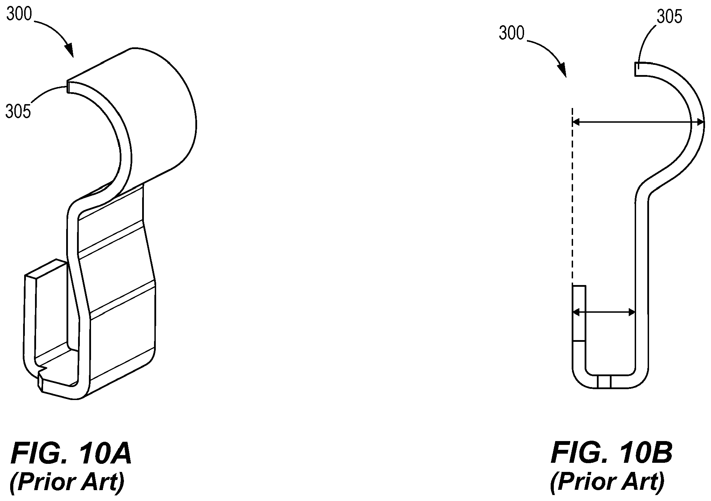

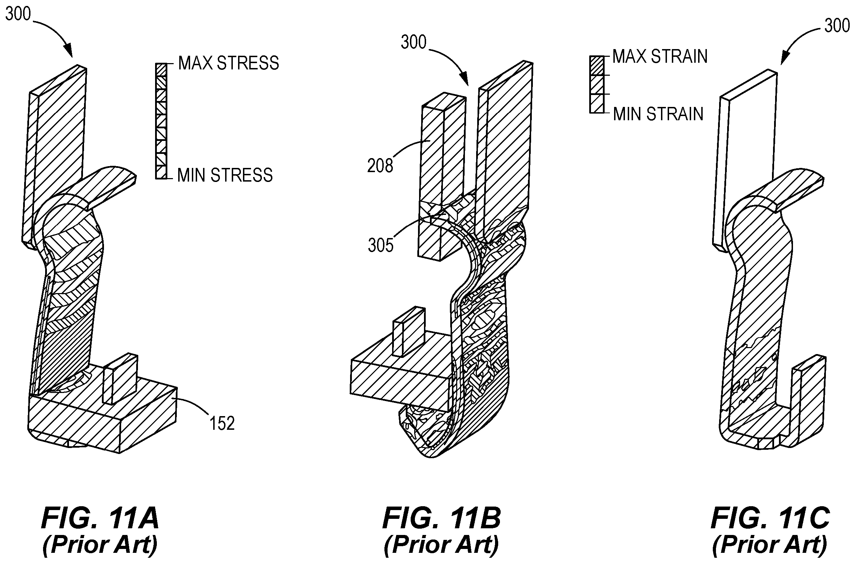

With reference to FIGS. 10A and 10B, existing battery packs typically have a terminal 300 that deforms, and a sharp contact 305 disposed between the terminal 300 and the end cap 120 causes that significant wear, or stubbing, in the material of the end cap 120. As a result, over time the existing terminal 300 may incorrectly interface with a hand-held power tool (e.g., causing an undesirable disconnection, or other undesirable interaction). Furthermore, and as illustrated in FIGS. 11A-11C, the stress on existing terminals 300 resulting from the force of the interfacing power tool concentrates stress into the lever arm adjacent to the PCB 152, which results in plastic strain on the terminal 300. Combined, the wear of the end cap 120 and the plastic strain induced in the existing terminal 300 reduces the effectiveness of the contact provided by the terminal 300.

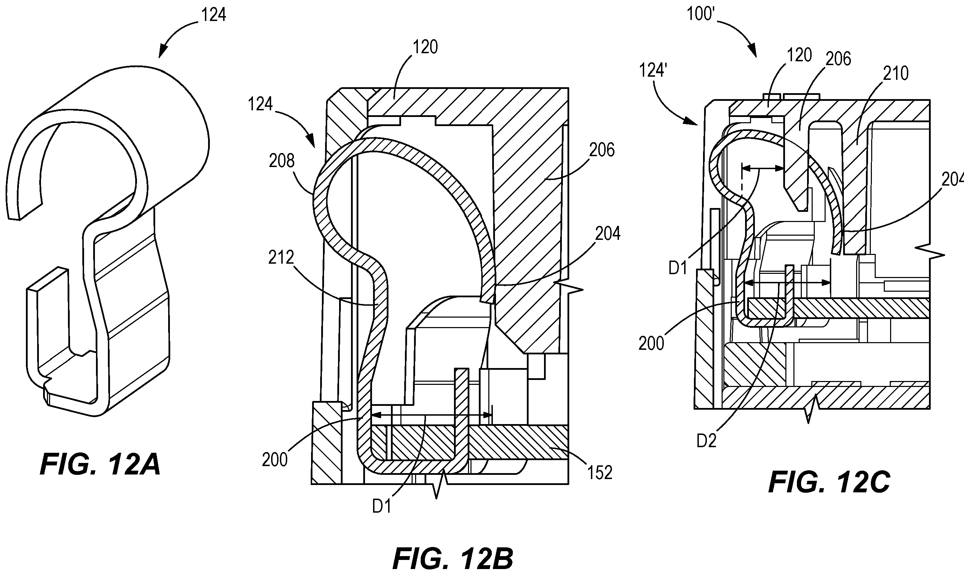

In contrast to existing terminals (e.g., the terminal 300), the terminals 124 illustrated in FIGS. 12A-13B are designed to eliminate or substantially reduce the wear and plastic strain induced during the operation of the battery pack 100, which increases the lifetime of the battery pack 100 and reduces the need for maintenance. With specific reference to FIG. 12B, the terminal 124 defines a curved terminal contact 208 and a bent portion 212 disposed between the first end 200 of the terminal and the terminal contact 208. As explained in further detail below, the bent portion 212 is curved to reduce the force induced at the first end 200 by a corresponding terminal at the terminal contact 208. It will be appreciated that the second end 204 of the terminal is shaped and sized such that the first rib 206 of the end cap 120 is contacted by a tangential surface of the terminal 124. The terminal 124 defines a distance D1 between the first end 200 contacting the PCB 152 and the second end 204 contacting the first rib 206.

FIG. 12C illustrates another example of a battery pack 100 that has a terminal 124'. The terminal 124' is similar to the terminal 124 and includes like parts, including the first end 200, the second end 204, and the terminal contact 208. The terminal 124' has an extended distance D2 between the first end 200 and the second end 204 that is greater than the distance D1. It will be appreciated that the distance D2 allows for a greater curvature and amount of material at the second end 204 of the terminal 124. As a result, the terminal 124' may provide a greater spring force against the terminal contact 208, which increases the connective force between the terminal 124' and the terminals of the hand-held power tool. The second end 204 of the terminal contacts a second rib 210 of the battery pack 100. In some examples, the first rib 206 may include a slot for receiving the terminal 124' or the battery pack 100 may only include the second rib 210.

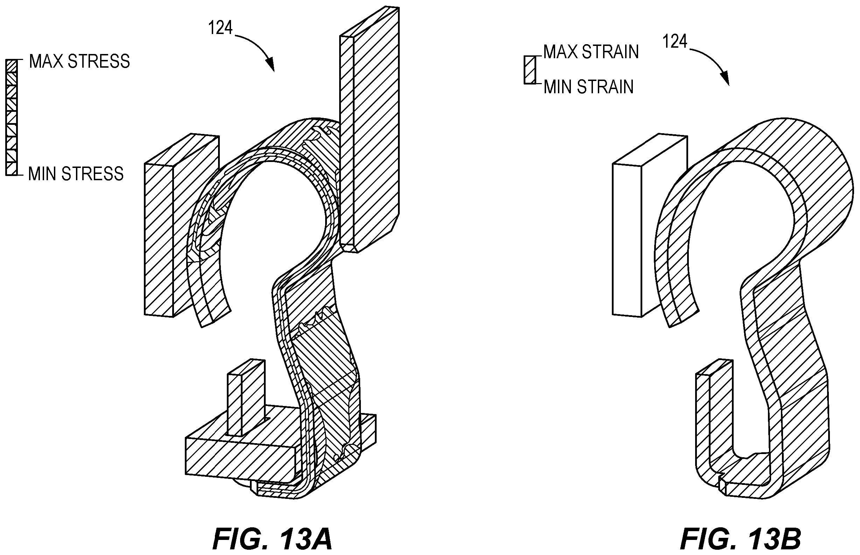

With reference to FIGS. 13A and 13B, by adjusting the curvature of the bent portion 212 and contacting the first rib 206 or the second rib 210 with the tangential surface of second end of the terminal 124, the stress created when coupling the terminal 124 with a respective terminal of a hand-held power tool is evenly distributed. It will be appreciated that the stress is low enough to eliminate or substantially reduce plastic strain on the terminal 124. It will be further appreciated that the decrease in plastic strain will correspondingly reduce the likelihood of unintentional disconnection during operation. It will be appreciated that the shape of the first rib 206 and the terminal 124 increase the ease of assembly as a tangential contact provides several points of contact.

Although the disclosure has been described with reference to certain preferred aspects, variations and modifications exist within the scope and spirit of one or more independent aspects of the disclosure as described. Various features and advantages of the disclosure are set forth in the following claims.

## Claims

1. A battery pack comprising:
a casing configured to couple to a power tool;
a cell frame supported within the casing, the cell frame including a plurality of receptacles to secure a plurality of interconnected battery cells; and
an outer housing at least partially surrounding the casing and the cell frame, the outer housing including protrusions extending through the casing and contacting the cell frame, the protrusions defining multiple points of contact between the casing and the outer housing,
wherein the protrusions are positioned and configured to integrate the casing and the outer housing together to form a unitary structure.

2. The battery pack of claim 1, wherein the casing includes a flange, and wherein each of the protrusions extends through the flange to limit relative movement between the outer housing and the casing and / or wherein the protrusions extend from the outer housing in a direction parallel to an axis of assembly associated with the casing and the outer housing.

3. The battery pack of claim 1 or 2 , wherein the protrusions secure the outer housing to the casing such that vibrational forces experienced by the casing and the outer housing during an operation of the power tool are transferred through the casing to the cell frame and/ or wherein the protrusions are spaced about an inner periphery of the outer housing to define a plurality of connection points between the casing and the outer housing.

4. The battery pack of one of claims 1 to 3, wherein the protrusions define multiple points of contact between the casing, the outer housing, and the cell frame.

5. A battery pack comprising:
a casing configured to couple to a power tool; and
a cell frame supported within the casing, the cell frame including
a plurality of receptacles to support interconnected battery cells, and
a PCB electrically connected to the battery cells,
and a terminal configured to engage a corresponding power tool terminal of the power tool, the terminal having a first end and a second end formed as a curved terminal contact, the terminal secured to the PCB at the first end and engaged with casing at the curved terminal contact, the curved terminal contact deformable during engagement with the corresponding power tool terminal to maintain electrical contact between the battery pack and the power tool.

6. The battery pack of claim 5, wherein the casing includes an end cap that substantially encloses the interconnected battery cells within the casing, and wherein the terminal is exposed through the end cap and / or wherein the end cap includes a first rib, and wherein the terminal contacts the first rib along a tangential surface.

7. The battery pack of claim 6, wherein the end cap includes a first rib and a second rib, and wherein the terminal contacts the first rib through a slot in the first rib and the terminal contacts the second rib along a tangential surface.

8. The battery pack of one of claims 5 to 7, wherein the curved terminal contact defines an exposed contact portion extending through the casing and the first end of the terminal is enclosed within the casing and/ or wherein deformation of the curved terminal contact during engagement with the corresponding terminal of the power tool induces a spring force that biases the curved terminal contact toward the corresponding terminal of the power tool.

9. The battery pack of one of claims 5 to 8, wherein the terminal includes at least one power terminal and at least one communication terminal exposed through the casing, and wherein the at least one power terminal is positioned to mate with a corresponding power terminal of the power tool and the at least one communication terminal is positioned to mate with a corresponding communication terminal of the power tool.

10. A battery pack comprising:
a casing configured to couple to a power tool;
a cell frame supported within the casing, the cell frame receiving a plurality of battery cells;
a PCB supported by the cell frame;
a weld strap supported by the cell frame and electrically connected to the plurality of battery cells; and
a voltage tap supported by the cell frame and electrically connected between the PCB and the weld strap, the voltage tap defined by a deformable body that provides an elastic interaction with the PCB and the weld strap.

11. The battery pack of claim 10, wherein the cell frame includes an upper frame disposed adjacent to the PCB and a lower frame coupled to the upper frame, and wherein the voltage tap extends from the PCB through the upper frame and contacts the lower frame.

12. The battery pack of claim 10 or 11, wherein the voltage tap includes a vertical portion extending from the PCB through the upper frame, a horizontal portion coupled to the weld strap positioned in the lower frame, and a curved transitional portion disposed between the vertical portion and the horizontal portion.

13. The battery pack of claim 12, wherein the transitional portion is deformable under stress while the vertical portion remains supported by the upper frame and the horizontal portion remains coupled to the weld strap.

14. The battery pack of claim 12 or 13, wherein the vertical portion of the voltage tap extends through an opening defined by the upper frame and the horizontal portion of the voltage tap is supported by the lower frame.

15. The battery pack of one of claims 12 to 14, wherein the transitional portion extends away from the horizontal portion and the vertical portion such that an outermost edge of the transitional portion is disposed at a distance away from the vertical portion, and wherein the distance is greater than a thickness of the voltage tap and/ or wherein a radius of the transitional portion and the distance are correlated such that an increase in the radius of the transitional portion corresponds with an increase of the distance.
